# EUROPEAN PATENT APPLICATION

(11) **EP 4 848 414 A1**
(43) Date of publication of application: **02.12.2026**
(21) Application number: 25179475.6
(22) Date of filing: 28.05.2025
(51) Int. Cl.: H01M 10/659, H01M 10/6554, H01M 10/613, H01M 50/291, B60L 50/64

(54) **BATTERY SYSTEM AND ELECTRIC VEHICLE INCLUDING THE SAME**

(71) Applicant: SAMSUNG SDI CO., LTD., Yongin-si, Gyeonggi-do 17084 (KR)
(72) Inventor: Pflüger, Christoph, 8041 Graz (AT); Köppel, Andreas, 8144 Haselsdorf-Tobelbad (AT); Kraus, Paul, 8020 Graz (AT); Aigner, Simon, 8041 Graz (AT); Fuchs, Philipp, 8401 Kalsdorf (AT); Lorenz, Karin, 8472 Vogau-Straß (AT)
(74) Representative: Gulde & Partner

(57) **Abstract**

The present disclosure refers to a battery system including a pack frame (10) including a plurality of wall elements (20) and at least one battery compartment (11) delimited by the wall elements (20), a plurality of battery cells (12) disposed inside the at least one battery compartment (11), wherein one or more chambers (21) are formed inside at least one of the wall elements (20), wherein the one or more chambers (21) are filled with a phase change material, the phase change material consisting of saccharides.

## Description

### Field of the Disclosure

Embodiments of the present disclosure relate to a battery system, a pack frame for a battery system, an electric vehicle including such a battery system and a method for manufacturing such a battery system.

### Technological Background

A battery module is formed of a plurality of battery cells connected together in series or parallel. That is, the battery module is formed by interconnecting the electrode terminals of the plurality of battery cells, depending on a desired amount of power and in order to realize a relatively high-power rechargeable battery.

Battery modules can be constructed either in a block design or in a modular design. In the block design each battery cell is coupled to a common current collector structure and a common cell management unit and accommodated in a housing. In the modular design, several battery cells are connected together to form submodules and several submodules are connected together to form the battery module. In automotive applications, battery systems often include a plurality of battery modules connected together in series to provide a desired voltage.

A battery pack is a set of any number of (for example identical) battery modules and/or individual battery cells. The battery modules and/or battery cells may be configured in a series, parallel or a combination of both to deliver the desired voltage, capacity, and/or power density. Components of a battery pack include the individual battery modules, and interconnects, which provide electrical conductivity between the battery modules.

An active or passive thermal management system may be included to provide thermal control of the battery pack, to safely use the at least one battery module by efficiently emitting, discharging, and/or dissipating heat generated from its battery cells. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the battery cell deteriorates and the life-span of the rechargeable battery is shortened. Thus, cell cooling for effectively emitting/discharging/dissipating heat from the battery cells is required.

The effective management of thermal energy is essential for the optimal functioning and longevity of rechargeable batteries in mobile applications. This is because the ability to regulate temperature is crucial for maintaining full performance and operational readiness in a wide range of conditions. Thermal management encompasses both cooling and heating operations. Given the considerable diversity of rechargeable battery variants, characterized by differences in cell chemistry and structure, thermal management must be tailored to the specific requirements of each variant. A similar situation pertains with regard to the numerous different vehicle applications, which encompass a range of vehicles from small city cars to sports cars, as well as vehicles with mild hybridization and purely electric vehicles. Furthermore, integration into the vehicle's thermal circuits is of significant importance.

In the case of air cooling, cooling air flows around the battery cell, thereby cooling the freely accessible surfaces. As this type of cooling does not necessitate direct thermal contact with the battery cell, the interface to a cooling system is relatively straightforward. Nevertheless, the installation space required for the cooling air ducts between the battery cells is considerable, and the cooling effectiveness, in particular the homogeneity of cell cooling, is often inadequate. In contrast, cooling methods that establish thermal contact with the battery cell and dissipate the heat via heat conduction are demonstrably more effective than air cooling in terms of cooling efficacy. Nevertheless, the design of the thermal contact presents a new set of challenges. The interface to the cooling system is more complex, as the cooling apparatus is in direct contact with the electrical components of the battery cell. In the case of battery cells with a low height and sufficiently thick cell walls, it is sufficient to simply make contact with a bottom of the battery cell via a cooling plate. Should this prove inadequate, supplementary heat conduction elements must be incorporated between the battery cells to facilitate the transfer of heat to the cooling plate. However, this results in a heavier and more expensive cooling system. The use of fluid-conducting cooling plates between the battery cells has been demonstrated to be an effective method, as the heat conduction path from the interior of the battery cell to the cooling fluid is relatively short, resulting in a high degree of temperature homogeneity within the battery cell. An alternative approach to cooling is arrester cooling. In this method, the interior of the battery cell is cooled directly via the electrodes. Pouch cells are particularly well-suited for this type of cooling, as they have flat and therefore relatively easy-to-contact terminals. The waste heat from the battery cells is directed into a cooling plate. There, either cooling water or an evaporating refrigerant absorbs the heat and dissipates it to the environment via the vehicle's cooling or refrigeration system.

Exothermic decomposition of cell components may lead to a phenomenon known as thermal runaway. Generally, thermal runaway describes a process that accelerates due to increased temperature, which in turn releases energy that further increases temperature. Thermal runaway occurs when an increase in temperature altars the conditions in a way that causes a further rise in temperature, often leading to a destructive outcome. In rechargeable battery systems, thermal runaway is associated with strong exothermic reactions that are accelerated by temperature rise. During thermal runaway, the battery cell temperature rises incredibly fast and the energy stored is released very suddenly. In extreme cases, thermal runaway can cause battery cells to explode and start fire. In less severe cases, it can cause battery cells to be damaged beyond repair.

When a battery cell is heated above a critical temperature, the battery cell can transition into thermal runaway. Generally, temperatures outside the safe region, either on the low or high side, may lead to irreversible damage to the battery cell and therefore may potentially trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through a venting opening in a battery cell housing (or casing) into the battery pack. The main components of the vented gas are H₂, CO₂, CO, electrolyte vapor, and other hydrocarbons. The vented gas is therefore flammable and potentially toxic. The vented gas also causes a gas-pressure to increase inside the battery pack. In the worst case, the high temperatures lead to the process spreading to neighboring cells, resulting in a fire in the battery pack. At this stage, the fire is hardly impossible to extinguish.

Battery systems typically include a plurality of battery cells arranged within a pack frame that provides structural integrity and protection. The battery cells may for example be disposed in multiple packs placed in neighboring battery compartments within the pack frame. The pack frame itself must absorb a lot of forces during regular operation due to swelling of the battery cells or mechanical shocks and must therefore be made of a material which offers high mechanical strength and durability, such as aluminum or steel. However, these materials also exhibit high thermal conductivity, which can facilitate heat transfer between adjacent battery cells. During normal operation, heat generation within the battery pack may be manageable, for example through cooling systems and other thermal management techniques. However, under extreme conditions, such as thermal runaway events, excessive heat can be transferred through the pack frame, leading to overheating of neighboring battery cells and increasing the risk of thermal propagation.

In conventional battery pack designs, if one battery cell enters a thermal runaway, the heat can quickly spread to adjacent battery cells via the thermally conductive pack frame, thereby triggering a chain reaction. This issue is particularly problematic in battery systems with tightly packed battery cells, where heat dissipation is limited. According to measurements of the heat in the pack frame during thermal propagation, the pack frame can reach temperatures of over 200°C.

It is therefore an object of the present disclosure to overcome these problems, for example to provide a battery system that better handles a thermal runaway by reducing thermal propagation between adjacent battery cells.

### Summary of Invention

The present disclosure is defined by the appended claims. The description that follows is subjected to this limitation. Any disclosure lying outside the scope of the claims is only intended for illustrative as well as comparative purposes.

According to an embodiment, a battery system includes a pack frame including a plurality of wall elements and at least one battery compartment delimited by the wall elements, and a plurality of battery cells disposed inside the at least one battery compartment, wherein one or more chambers are formed inside at least one of the wall elements, wherein the one or more chambers are filled with a phase change material, the phase change material consisting of saccharides.

According to an embodiment, the battery system includes a phase change material including saccharides with a melting point in the range of 100 °C to 250 °C.

According to an embodiment, the battery system further includes sealing elements sealing the one or more chambers so as to contain the phase change material therein.

According to an embodiment, the sealing elements are wedges which are clamped into openings of the respective wall element.

According to an embodiment, the wedges are made of a metal.

According to an embodiment, the wall elements are made out of cast iron.

According to an embodiment, the one or more chambers are formed by a continuous casting method.

According to an embodiment, the battery system further includes cell spacers arranged alternately with the battery cells, wherein one or more chambers are formed inside the cell spacers and are filled with a phase change material consisting of saccharides.

According to an embodiment, the multiple wall elements delimit two separate battery compartments with one wall element separating the two separate battery compartments.

An embodiment relates to an electric vehicle including the battery system.

An embodiment relates to a pack frame for a battery system, wherein the pack frame includes multiple wall elements and at least one battery compartment delimited by the wall elements, wherein the at least one battery compartment is configured to contain a plurality of battery cells, wherein one or more chambers are formed inside at least one of the wall elements, wherein the one or more chambers are filled with a phase change material, the phase change material consisting of saccharides.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 is a schematic perspective view of a battery system with a single battery compartment according to an embodiment.
FIG. 2 is a schematic perspective view of a battery system with two battery compartments according to another embodiment.
FIG. 3A is a schematic cross-sectional view of a wall element of the battery system of FIG. 1 or 2.
FIG. 3B is a schematic perspective view of the wall element of FIG. 3A.

### Detailed Description of the Invention

Reference will now be made in detail to embodiments, examples of which are illustrated in the accompanying drawings. The effects and features of the exemplary embodiments, along with their implementation methods, will be described with reference to the accompanying drawings. In the drawings, like reference numerals denote like elements, and redundant descriptions are omitted. The present disclosure, however, may be embodied in various forms and should not be construed as being limited to the illustrated embodiments. Rather, these embodiments are provided as examples to ensure that the disclosure is thorough and complete, fully conveying the embodiments and features of the present disclosure to those skilled in the art.

Accordingly, processes, elements, and techniques that are not considered essential for a complete understanding of the aspects and features of the present disclosure by those skilled in the art may not be described.

As used herein, the term "and/or" includes all combinations of one or more of the associated listed items. Expressions such as "at least one of", when preceding a list of elements, modify the entire list of elements and not the individual elements within the list. Further, the use of "may" when describing embodiments of the present disclosure refers to "one or more embodiments of the present disclosure". In the following description of embodiments of the present disclosure, a singular form of a term may include plural form unless the context clearly indicates otherwise.

It will be understood that although the terms "first" and "second" are used to describe various elements, these elements should not be limited by these terms. These terms are merely used to distinguish one element from another. For example, a 'first' element may be referred to as a 'second' element, and vice versa, without altering the scope of the present disclosure.

It will be further understood that the terms "include," "comprise," "including," or "comprising" specify a property, a region, a number, a step, a process, an element, a component, or a combination thereof, but do not exclude other properties, regions, numbers, steps, processes, elements, components, or combinations thereof.

The terms "essentially forming" and "consisting essentially of" mean that specific additional components may be present, provided that they do not materially affect the essential characteristics of a composition.

It will also be understood that when a film, a region, or an element is referred to as being "above" or "on" another film, region, or element, it may be directly on the another film, region, or element, or there may be intervening films, regions, or elements.

Herein, the terms 'upper' and 'lower' are defined according to the z-axis. For example, the upper cover is positioned at the upper part of the z-axis, while the lower cover is positioned at the lower part thereof. In the drawings, the sizes of elements, layers, and regions may be exaggerated for clarity. Specifically, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein shall have the same meanings commonly understood by one of ordinary skill in the relevant art to which the present disclosure belongs. It will be further understood that terms defined in commonly used dictionaries, should be interpreted in a manner consistent with their meaning in the context of the relevant art and/or the present disclosure, and should not be interpreted in an idealized or overly formal sense, unless expressly so defined herein.

### General Concept

According to one embodiment of the present disclosure, there is provided a battery system. The battery system includes a pack frame including a plurality of wall elements which form at least one battery compartment. A plurality of battery cells is disposed inside at least one battery compartment. In other words, the wall elements of the pack frame define an inner accommodation space inside which the battery cells are located. Thus, the battery system includes the plurality of battery cells, for example prismatic, pouch type or cylindrical battery cells. The battery cells may be arranged to form one or more battery packs. The pack frame provides structural support for the battery cells

One or more chambers are formed inside at least one of the wall elements of the pack frame, providing enclosed spaces within the structural components of the battery system. That is, at least one of the plurality of wall elements includes a chamber, or a plurality of chambers. Also, more than one, for example all, of the plurality of wall elements may include such a chamber or a plurality of chambers. The chambers are filled with a phase change material (PCM). The phase change material consists of saccharides. In other words, the PCM is disposed inside the chambers. The chambers may be understood as cavities defined in the wall element(s), for example during manufacturing of the wall element(s)/pack frame. The chambers may then subsequently be filled with the PCM. The PCM consists of saccharides means that the PCM includes only saccharides, or in other words only sugar, and nothing else, for example, not sugar alcohols.

In case of a thermal runaway occurring in one of the battery cells, excessive heat may be absorbed by the pack frame, for example, by the closest wall element of the pack frame and may thus be absorbed by the PCM disposed inside the wall element. Consequently, the PCM may undergo a phase transition thereby absorbing and dissipating large amounts of heat and may thus mitigate thermal propagation. That is, due to the PCM absorbing heat energy, thermal propagation of the thermal runaway event to other battery cells of the battery system may be prevented as the PCM may instead absorb excessive heat from the thermal runaway event. Thus, as a battery cell affected by the thermal runaway may dissipate large amounts of heat into the pack frame, less heat may be transferred to neighboring battery cells. Also, less heat energy will be transported via the wall elements of the pack frame to other battery cells. Thus, the battery system better handles a thermal runaway by reducing thermal propagation between adjacent battery cells. Saccharides/sugar provide for a cheap and environmentally friendly phase change material.

According to an embodiment, the phase change material includes saccharides with a melting point in the range of 100 °C to 250 °C. For example, the melting point may be in the range of 120 °C to 200 °C, or in the range of 140 °C to 180 °C. For example, the melting point may be approximately 160 °C. The PCM may be configured to absorb, after phase transition, i.e. after melting, an energy amount of, for example in the range of 20 kJ to 80 kJ per kilogram, for example in the range of 30 kJ to 70 kJ per kilogram, for example in the range of 50 kJ to 60 kJ per kilogram. For example, the PCM may be configured to absorb an energy amount of 56 kJ per kilogram. This melting point (range) ensures that the phase change material effectively absorbs heat during thermal events without degrading under normal operating conditions. By selecting saccharides with an appropriate melting point, thermal propagation may be effectively combated in a cheap and efficient manner.

According to an embodiment, the battery system includes sealing elements sealing the one or more chambers so as to contain the phase change material therein. In other words, the phase change material is contained in the one or more chambers within the wall elements via sealing elements, sealing the one or more chambers. The sealing elements ensure that no phase change material is leaked inside the battery system and keep the phase change material safe from possible contaminations. By enclosing the PCM within the chambers, the battery system maintains structural integrity while allowing the PCM to perform its heat-absorbing function.

According to an embodiment, the sealing elements are wedges, clamped into openings of the wall element. That is, the one or more wall elements which include the one or more chambers may have openings connected to the chambers. Through these openings, the PCM may be inserted or filled into the chambers. Such wedges can be easily inserted to close the opening without the need for complex tools, and effectively prevent any leakage. The driving of the wedge into the respective opening offers excellent control of the adjustment and tension needed for a precise and secure sealing. No chemical substances are required for sealing, so unlike other adhesives or sealants, the wedges offer a chemical free option for sealing the openings.

According to an embodiment, the sealing elements are made of a metal, for example the wedges are made of a metal. The sealing elements may, for example, be made of steel or aluminum or any other metal that is able to withstand forces occurring during regular operation of the battery system, such as swelling of the cells or mechanical shocks, as well as during a thermal runaway. Metallic wedges may provide for a durable and long-lasting sealing of the openings of the wall elements. Aluminum wedges may offer a good thermal conductivity. This way the heat of an exothermic decomposition of cell components such as a thermal runaway may be quickly dissipated to the phase change material. Aluminum for example is a very lightweight material, making aluminum wedges suitable as they do not add too much weight to the battery system.

According to an embodiment, the wall elements are made out of cast iron. Cast iron is highly corrosion-resistant, temperature-resistant, durable and an excellent heat accumulator. During an exothermic decomposition of cell components such as a thermal runaway the cast iron wall elements may be able to effectively absorb the heat, store it and release it slowly again. This allows any generated destructive heat to be effectively intercepted before it can reach neighboring battery cells. Further, cast iron offers high resistance to deformation and external impacts, ensuring that the battery system remains structurally sound even during a thermal runaway.

According to an embodiment, the one or more chambers are formed by a continuous casting method. Continuous casting allows for the creation of uniform and well-defined chambers within the wall elements, facilitating the integration of the phase change material. This may enhance production efficiency while maintaining the integrity of the battery system's thermal management features. The continuous casting method facilitates the formation of a highly stable construction, able to absorb heat and pass it slowly to the phase change material within the chambers without dissipating the excessive heat to neighboring battery compartments. The casting method may mean a process used to produce a metal product, by pouring liquid metal into a mold and solidifying it. This method offers higher productivity, lower material waste, and improved material quality.

According to an embodiment, the battery system includes cell spacers arranged alternately with the battery cells, wherein one or more chambers are formed inside the cell spacers and are filled with a phase change material consisting of saccharides. In other words, cell spacers may be placed in alternating order with the battery cells within the battery compartment(s), wherein one or more chambers are formed inside the cell spacers and are filled with a phase change material consisting of saccharides. According to this embodiment, not only the wall element(s) of the pack frame but also one or more of the cell spacers, for example all of the cell spacers, may include the above-explained chambers filled with a PCM. In the case of an exothermic decomposition of a battery cell the PCM may absorb the heat locally and effectively protect other battery cells from thermal propagation. The incorporation of a PCM within the cell spacers extends the thermal management beyond the wall elements/pack frame and provides localized heat absorption near individual battery cells. Thus, thermal propagation may not only be mitigated via the wall elements of the pack frame but also via the cell spacers in-between the battery cells.

According to an embodiment, the multiple wall elements delimit two separate battery compartments with one wall element separating the two separate battery compartments, wherein the wall element separating the two separate battery compartments includes one or more chambers filled with the phase change material. In other words, the battery system may include (at least) two battery compartments, wherein one of the wall elements divides the two battery compartments. This dividing wall element includes one or more chambers with a saccharide PCM as explained above. The delimitation of the separate battery compartments ensures that in the event of an exothermic decomposition of cell components such as a thermal runaway the heat energy is not, or only to a small extent, dissipated between neighboring separate battery compartments but is instead absorbed by the PCM. This way the neighboring battery compartment, and thus the battery cells therein, may be protected from irreparable damages.

According to an embodiment, a pack frame for a battery system includes multiple wall elements and at least one battery compartment delimited by the wall elements, wherein the at least one battery compartment is configured to contain a plurality of battery cells, wherein one or more chambers are formed inside at least one of the wall elements, and wherein the one or more chambers are filled with a phase change material. The phase change material consists of saccharides. The above explanations made with respect to the battery system apply accordingly.

### Specific Embodiments

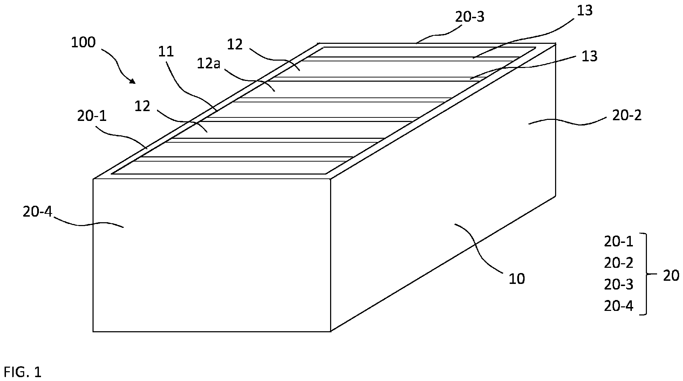

FIG. 1 shows a perspective schematic view of a battery system 100 according to an embodiment. The battery system 100 includes a pack frame 10 consisting of four wall elements 20-1, 20-2, 20-3, 20-4 which delimit a battery compartment 11. The battery system 100 further includes a plurality of battery cells 12 accommodated inside the battery compartment 11. The plurality of battery cells 12 are assembled or stacked in a row and separated by cell spacers 13.

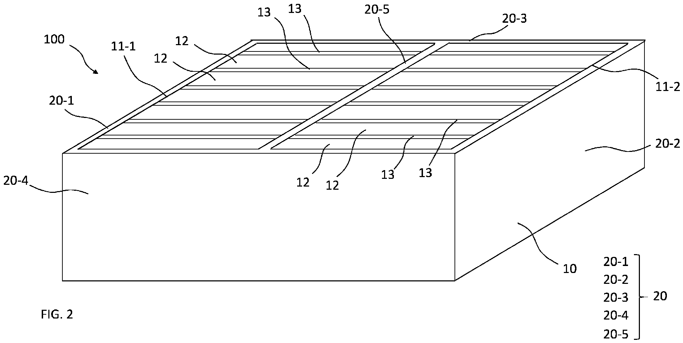

FIG. 2 illustrates a perspective schematic view of a battery system 100, according to another embodiment. The embodiment shown in FIG. 2 differs from the embodiment of FIG. 1 only in that it includes two battery compartments 11-1, 11-2 instead of one. That is, the pack frame 10 includes five wall elements 20-1, 20-2, 20-3, 20-4, 20-5 which delimit two neighboring battery compartments 11-1, 11-2. The two neighboring battery compartments 11-1, 11-2 are delimited by the wall element 20-5. Battery cells 12 are accommodated in both battery compartments 11-1, 11-2 and stacked alternately with cell spacers 13.

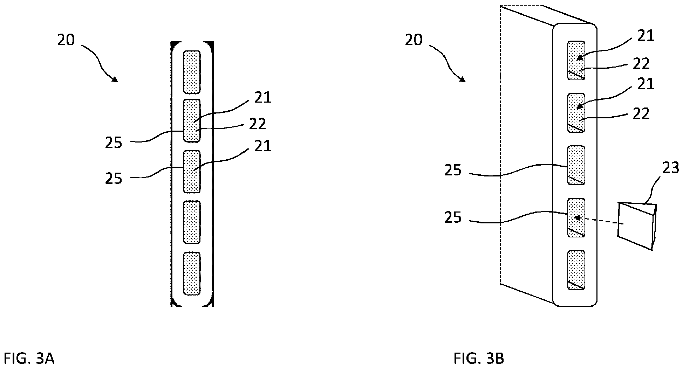

FIG. 3A illustrates a cross-sectional view of one of the wall elements 20 of the battery system 100 of the embodiment of FIG. 1 or FIG. 2. For example, the wall element 20 in FIG. 3A may be any one of the wall elements 20-1, 20-2, 20-3, 20-4 of the embodiment of FIG. 1 or any one of the wall elements 20-1, 20-2, 20-3, 20-4, 20-5 of the embodiment of FIG. 2. FIG. 3B illustrates the same wall element as FIG. 3A but in a schematic perspective view.

As shown in FIG. 3A, 3B, the wall element 20 includes, at an end thereof, a plurality of openings 25 which lead to or form part of chambers 21. Each opening 25 leads to or forms part of one chamber 21. These chambers 21 are formed within the wall elements 20, for example by casting, and are filled with a phase change material, PCM, 22. The PCM 22 consists of saccharides having a melting point of e.g., 160 °C. After the chambers 21 are filled with the PCM 22, they are sealed by clamping sealing elements 23 in the form of wedges into each of the openings 25, as illustrated for one of the chambers 21 in FIG. 3B. The sealing elements 23 ensure a sealing of the PCM 22 inside the wall elements 20.

If a thermal runaway occurs in one of the battery cells 12, excessive heat may be absorbed by the wall elements 20 of the pack frame 10. The heat is absorbed by the PCM 22 contained within the chambers 21 inside the wall elements 20. As a result, the PCM 22 undergoes a phase transition, allowing it to absorb and dissipate significant amounts of heat, thereby mitigating thermal propagation between the battery cells 12. In other words, by capturing thermal energy from the thermal runaway event, the PCM 22 helps to prevent the spread of the thermal runaway event to other battery cells 12 in the system. Additionally, the wall element 20-5 limits heat transfer between the neighboring battery compartments 11-1 and 11-2 by absorbing heat energy into its PCM.

This design protects the battery cells 12 within the same and also within the neighboring battery compartment 11 from irreparable damage. Consequently, while an affected battery cell 12a (see FIG. 1) releases a large amount of heat into the pack frame 10, the heat transfer to adjacent cells 12 is reduced. This enables the battery system to more effectively manage a thermal runaway by limiting thermal propagation between adjacent battery cells 12. Saccharides, such as sugar, serve as a cost-effective and environmentally friendly phase change material.

### Reference signs

- 100: battery system
- 10: pack frame
- 11: battery compartment
- 11-1: battery compartment
- 11-2: battery compartment
- 12: battery cells
- 13: cell spacers
- 20: wall elements
- 20-1: wall element
- 20-2: wall element
- 20-3: wall element
- 20-4: wall element
- 20-5: wall element
- 21: chambers
- 22: phase change material
- 23: sealing elements
- 25: openings

## Claims

1. A battery system (100) comprising:
a pack frame (10) comprising a plurality of wall elements (20) and at least one battery compartment (11) delimited by the wall elements (20), and
a plurality of battery cells (12) disposed inside the at least one battery compartment (11),
wherein one or more chambers (21) are formed inside at least one of the wall elements (20), and
wherein the one or more chambers (21) are filled with a phase change material (22), the phase change material (22) consisting of saccharides.

2. The battery system (100) as claimed in claim 1, wherein the phase change material (22) comprises saccharides with a melting point in the range of 100 °C to 250 °C.

3. The battery system (100) as claimed in any one of the preceding claims, further comprising sealing elements (23) sealing the one or more chambers (21) so as to contain the phase change material (22) therein.

4. The battery system (100) as claimed in claim 3, wherein the sealing elements (23) are wedges (24) which are clamped into openings (25) of the respective wall element (20).

5. The battery system (100) as claimed in claim 4, wherein the wedges (24) are made of a metal.

6. The battery system (100) as claimed in any one of the preceding claims, wherein the wall elements (20) are made out of cast iron.

7. The battery system (100) as claimed in any one of the preceding claims, wherein the one or more chambers (21) are formed by a continuous casting method.

8. The battery system (100) as claimed in any one of the preceding claims, further comprising cell spacers (13) arranged alternately with the battery cells (12), wherein one or more chambers are formed inside the cell spacers (13) and are filled with a phase change material consisting of saccharides.

9. The battery system (100) as claimed in any one of the preceding claims, wherein the plurality of wall elements (20) delimit two separate battery compartments (11-1, 11-2) with one wall element (20-5) separating the two separate battery compartments (11-1, 11-2), wherein the wall element (20-5) separating the two separate battery compartments (11-1, 11-2) comprises one or more chambers filled with the phase change material.

10. An electric vehicle comprising the battery system as claimed in any one of the preceding claims.

11. A pack frame (10) for a battery system (100), the pack frame (10) comprising a plurality of wall elements (20) and at least one battery compartment (11) delimited by the wall elements (20), wherein the at least one battery compartment (11) is configured to contain a plurality of battery cells (12), wherein one or more chambers (21) are formed inside at least one of the wall elements (20), wherein the one or more chambers (21) are filled with a phase change material (22), the phase change material (22) consisting of saccharides.
